# EUROPEAN PATENT SPECIFICATION

(11) **EP 2 980 307 B1**
(45) Date of publication and mention of the grant of the patent: **01.05.2019**
(21) Application number: 14774183.9
(22) Date of filing: 06.03.2014
(51) Int. Cl.: D06M 11/26, D01F 6/14, D06M 11/13, D06M 11/155, D06M 11/28, D06M 11/80, D06M 101/24

(54) **POLY(VINYL ALCOHOL)-BASED FIBERS HAVING EXCELLENT THERMAL AGING RESISTANCE, AND METHOD FOR PRODUCING SAME**
POLY(VINYLALKOHOL)-BASIERTE FASERN MIT HERVORRAGENDER THERMISCHER ALTERUNGSBESTÄNDIGKEIT UND VERFAHREN ZUR HERSTELLUNG DAVON
FIBRES À BASE DE POLYALCOOL VINYLIQUE AYANT UNE EXCELLENTE RÉSISTANCE AU VIEILLISSEMENT THERMIQUE ET PROCÉDÉ DE PRODUCTION DE CELLES-CI

(30) Priority: 29.03.2013 JP 2013071106
(43) Date of publication of application: 03.02.2016
(73) Proprietor: Kuraray Co., Ltd., Kurashiki-shi, Okayama 710-0801 (JP)
(72) Inventor: YAMAMOTO, Ryo, Okayama-shi Okayama 702-8601 (JP); KOBAYASHI, Toshiaki, Okayama-shi Okayama 702-8601 (JP); HAYASHI, Hideo, Okayama-shi Okayama 702-8601 (JP)
(74) Representative: Vossius & Partner Patentanwälte Rechtsanwälte mbB
(86) International application number: PCT/JP2014/055857
(87) International publication number: WO 2014/156546

(56) References cited:
- WO-A1-2013/023432
- JP-A- H07 102 414
- JP-B- S 351 669
- JP-B- S 457 691
- JP-B- S4 617 598

## Description

### CROSS REFERENCE TO RELATED APPLICATION

The present application claims priority to Japanese Patent Application No. 2013-071106 filed on March 29, 2013.

### FIELD OF THE INVENTION

The present invention relates to poly(vinyl alcohol)-based fibers (polyvinyl alcohol fibers) having excellent heat aging resistance even when the fibers are used for a long time under a high temperature environment, and to a method for producing the same.

### BACKGROUND ART

Polyvinyl alcohol fibers (PVA fibers) have excellent tenacity, elasticity, chemical resistance, and adhesiveness, and therefore, are widely used as various industrial materials including reinforcing material in rubber, asbestos-alternative as reinforcing material in cements or concretes, separators in alkaline batteries (dry cell), ropes, and fishing nets.

In general, PVA fibers have been known to exhibit brown coloration due to oxidative degradation of PVA by heat treatment at a high temperature. Patent Document 1 (Japanese Examined Patent Publication No. S35-1669) discloses a method for inhibiting coloration of polyvinyl alcohol fibers and a molded article thereof during heat treatment, including: adding one or two or more of inorganic or organic water soluble metallic salt into a spinning solution or into a coagulation bath such that the salt is contained in the PVA fibers or the molded article in an amount of 1% or less, where the metallic salt is a salt of a metal selected from the groups of metals ranging from titanium to copper in periodic table or of tin and lead; or dipping spun PVA fibers or a molded article thereof in a bath containing the metallic salt such that the salt is contained in the PVA fibers or the molded article in an amount of 1% or less, and subsequently drying and heat treating the fibers or the article.

Patent Document 2 (Japanese Examined Patent Publication No.S45-7691) discloses a method of achieving PVA synthetic fibers having excellent thermal stability and a product thereof by making the PVA synthetic fibers and the product thereof to contain one or two or more of thiazoles compound or imidazolines compound each having a mercapto group in the molecular structure.

In this document, the thiazoles compound or imidazolines compound each having a mercapto group in the molecular structure is used as a reducing agent. For example, Examples of this document describes a reduction ratio of tenacity by a heat treatment at 140°C for 96 hours is controlled to the range of 16.8 to 26.7%.

With respect to linear polymers that generally exhibit deterioration such as discoloration and tenacity reduction by being heated to a high temperature, Patent Document 3 (Japanese Examined Patent Publication No. S38-22720) discloses a linear polymer composition that has excellent thermal stability and contains: 2-mercaptoimidazoles and metallic salts capable of forming poorly water soluble complex salts with the 2-mercaptimidazoles; poorly water soluble complex salt achieved from the 2-mercaptimidazoles and the metallic salt; or the 2-mercaptimidazoles and the poorly water soluble complex salt.

For example, in Example 3 of this document, the 2-mercaptoimidazoles and the metallic salts capable of forming poorly water soluble complex salts with the 2-mercaptimidazoles are combined to improve thermal stability of PVA fibers under heat treatment at 140°C for 70 hours.

Patent document 4 (Japanese Publication No. H07-102414) also discloses PVA fibres resistant to thermal ageing.

### RELATED ART DOCUMENTS

### PATENT DOCUMENTS

Patent Document 1: Japanese Examined Patent Publication No. S35-1669
Patent Document 2: Japanese Examined Patent Publication No. S45-7691
Patent Document 3: Japanese Examined Patent Publication No. S38-22720
Patent Document 4: Japanese Publication No. H07-102414

### SUMMARY OF THE INVENTION

### PROBLEMS TO BE SOLVED BY THE INVENTION

However, Patent Document 1 only describes prevention of coloration due to heat treatment during production process of fibers.

Although Patent Document 2 and Patent Document 3 describe the use of fibers under high temperature conditions for about 100 hours, heat aging resistance that enables the use for still longer time is demanded.

Therefore, an object of the present invention is to provide polyvinyl alcohol fibers having excellent heat aging resistance capable of suppressing significant reduction of tenacity even when the fibers are used under high temperature conditions for a very long time beyond the expectation based on the conventional knowledge.

### MEANS FOR SOLVING THE PROBLEMS

As a result of extensive research for achieving the above-described object, the inventors confirmed that heat aging resistance for a long time could not be improved by the metallic salt used as an antioxidant for preventing coloration. As a result of further research, the inventors found that heat aging resistance of PVA fibers under high temperature conditions for a long duration beyond the conventionally achievable range can be surprisingly achieved by combining a boron compound with the antioxidant in a specific proportion, and achieved the present invention.

A first aspect of the present invention is PVA fibers having excellent heat aging resistance, containing:
an antioxidant composed of an inorganic or organic water soluble salt of at least one metal selected from the group consisting of manganese, copper, iron, nickel, cobalt, and zinc; and
a boron compound that acts as a chelating agent for the antioxidant,
wherein the content of the antioxidant in the fiber is 0.05 % by mass or more (for example, 0.05 to 10 % by mass), and a proportion (mass ratio in %) of the boron compound relative to a mass of the antioxidant is 0.5% to 60% by mass.

The boron compound may be at least one selected from boric acid and borates. Preferably, the antioxidant is a metal halide. Preferably, the antioxidant is at least one selected from the group consisting of manganese chloride, copper chloride, iron chloride, nickel chloride, and cobalt chloride, where the manganese chloride is specifically preferred.

The above-described polyvinyl alcohol fibers may further contain sodium chloride as a stabilizer for the antioxidant. For example, proportion of the sodium chloride to the antioxidant may be about 5 to 50% by mass.

The above-described polyvinyl alcohol based fiber has excellent heat aging resistance for a long duration. For example, the fiber may have a tenacity retention (retention rate of residual tenacity) of 60% or more after a heat treatment at 150°C for 400 hours.

The above-described polyvinyl alcohol based fiber may be advantageously used, for example, as a reinforcing material in a rubber.

A second aspect of the present invention is a method for producing the above-described polyvinyl alcohol fibers, at least including:
performing spinning of fibers from a spinning solution containing polyvinyl alcohol based polymer,
wherein the antioxidant is added into the spinning solution or the antioxidant is added to the polyvinyl alcohol based fiber after the spinning in a form of a solution or a dispersion of the antioxidant, and
the boron compound is added into the spinning solution or applied to the fibers after the spinning by a form of a solution or a dispersion of the boron compound.

For example, the antioxidant and the boron compound may be preferably applied to the polyvinyl alcohol based fiber after the spinning.

The above-described production method may further comprises drawing of the fibers performed after the spinning, and the antioxidant and the boron compound may be applied to the polyvinyl alcohol based fiber after the drawing.

The boron compound may be applied to the fibers after applying the antioxidant to the fiber after the spinning or the drawing of the fibers.

In the description of the present invention, converted mass of the metallic salt is calculated as a mass of an anhydride even when the metallic salt is used in the form of hydrate.

### EFFECT OF THE INVENTION

According to the present invention, by the use of specific antioxidant and boron compound that is combined with the antioxidant in a specific proportion as a chelating agent for the antioxidant, it is possible to achieve PVA fibers exhibiting excellent tenacity retention under high temperature conditions for a long period of time that is beyond the expectation based on the prior art.

### MODE FOR CARRYING OUT THE INVENTION

According to the method for producing PVA fibers of the present invention, it is possible to produce PVA fibers having the above-described heat aging resistance while using a simple and easy method.

Hereafter, practical explanation of the present invention will be provided.

### [Polyvinyl alcohol based fiber]

A first embodiment of the present invention relates to PVA fibers having excellent heat aging resistance, the PVA fibers including: an antioxidant composed of an inorganic or organic water soluble salt of at least one metal selected from the group consisting of manganese, copper, iron, nickel, cobalt, and zinc; and a boron compound that acts as a chelating agent for the antioxidant.

The antioxidant is contained in the fiber in an amount of 0.05% by mass or more, and a proportion of the boron compound to the antioxidant is 0.5% to 60% by mass.

### [Antioxidant]

The antioxidant is composed of an inorganic or organic water soluble salt of at least one metal selected from the group consisting of manganese, copper, iron, nickel, cobalt, and zinc. The antioxidant may be substantially composed of inorganic or organic water soluble salt of at least one metal selected from the group consisting of manganese, copper, iron, nickel, cobalt, and zinc. Among these metallic compound, manganese, copper, iron, nickel, cobalt or the like are preferred as the metal, where manganese is specifically preferred.

Only one selected from the above-described antioxidants may be used. Alternatively, two or more antioxidants may be used in combination.

As an acid residue (acid radical) constituting the inorganic water soluble metallic salt, it is possible to use sulfuric acid, nitric acid, phosphoric acid, and halide acid (for example, hydrofluoric acid, hydrochloric acid, oxalic acid, and hydroiodic acid). As an acid residue (acid radical) constituting the organic water soluble metallic salt, it is possible to use formic acid, oxalic acid, acetic acid, benzoic acid, or the like.

Among the above-described metallic salts, inorganic water soluble metallic salt is preferred, where metal halide is preferably used. Manganese halide, copper halide, iron halide, nickel halide, cobalt halide are preferred as the metal halide. Specifically, manganese chloride, copper chloride, iron chloride, nickel chloride, and cobalt chloride are preferably used.

In order to provide heat aging resistance for a long time, the antioxidant must be contained in the PVA fibers in an amount of 0.05% by mass or more. Preferably the content of the antioxidant may be 0.07% by mass or more, more preferably 0.1% by mass or more.

The mass of the PVA fibers may be defined as a mass at a state where the PVA fibers are dipped in water, subjecting the fibers to centrifugal hydroextraction, and subsequently air drying the fibers at about 20°C for 16 to 20 hours.

The upper limit of the proportion of the antioxidant composed of the metallic salt is not specifically limited provided that PVA fibers having excellent heat aging resistance can be produced. Based on the consideration of processability or the like, proportion of the antioxidant in the fiber may be about 10% by mass or less, 5% by mass or less, or 2% by mass or less.

### [Boron compound]

In the present invention, it is very important to use a boron compound as a chelating agent for the antioxidant. Conventionally, organic aminocarboxylate such as EDTA has been generally used as a chelating agent. Such a chelating agent is bonded with metal ions by coordinate bonding to form complex ions thereby sequestering the metal ions. However, the heat aging cannot be suppressed by combining the conventional chelating agent with the antioxidant. In the present invention, surprisingly, it was found that heat aging resistance of PVA fibers can be achieved for a long time period far longer than the conventionally achievable time period by combining the boron compound, in a predetermined proportion, with the above-described antioxidant composed of metallic salt.

Species of the boron compound is not specifically limited as long as it acts as a chelating agent for the antioxidant. For example, boric acids, boric acid esters, borates, boronhydride or the like may be used. It is possible to use single species or a combination of two or more species selected from these compounds. Orthoboric acid, metaboric acid, and tetraboric acid may be used as the boric acids. Boric acid triethyl esters, boric acid trimethyl esters or the like may be used as the boric acid esters. Alkaline metal salts or alkaline earth metal salts of the above described various boric acids, borax or the like may be used as the borates. Among these compounds, orthoboric acids (hereafter occasionally referred to as boric acid) and borates are preferred.

Proportion (in % by mass) of the boron compound must be 0.5% to 60% by mass based on the antioxidant (that is, amount of the boron compound is 0.5 to 60 parts by mass relative to 100 parts by mass of the antioxidant), preferably 1% by mass or more, more preferably 1.5% by mass or more. Where the proportion of the antioxidant combined with the boron compound is less than 0.5% by mass, the boron compound cannot provide sufficient contribution as a chelating agent, resulting in failure to achieve heat aging resistance for a long time.

In order to retain satisfactory applicability as a rubber reinforcing material, proportion of the boron compound combined with the antioxidant is 60% by mass or less, or 55% by mass or less.

Where necessary, the fibers may contain sodium chloride. Where the sodium chloride is further combined with the antioxidant and the boron compound used in the present invention, it is preferred since the heat aging resistance of the fiber can be further improved.

In the above-described Patent Documents 1 and 2, sodium chloride itself is recognized as a material the use of which has no contribution to prevent oxidation of the PVA fibers. However, possibly due to contribution of sodium chloride as a stabilizer for the antioxidant, heat aging resistance of the PVA fibers can be improved by the addition of the sodium chloride.

Proportion (in % by mass) of the sodium chloride to the antioxidant may be about 5 to 50% by mass (that is, amount of sodium chloride may be about 5 to 50 parts by mass per 100 parts by mass of the antioxidant), preferably about 10 to 50% by mass, more preferably about 15 to 50% by mass.

### [Production method of PVA fibers]

A second embodiment of the present invention is a method for producing PVA fibers, the method at least including:
performing spinning of fibers from spinning solution containing PVA polymer,
wherein an antioxidant is added into the spinning solution or applied to (made adhere to) the PVA spun fibers (PVA fibers after spinning) by a form of a solution or a dispersion of the antioxidant, and
an boron compound is added into the spinning solution or applied to the PVA spun fibers by a form of a solution or a dispersion of the boron compound.

The PVA fibers used in the present invention are composed of a PVA-based polymer.

The PVA-based polymer is not particularly limited provided that the polymer is mainly composed of vinyl alcohol units. If desired, different structural units (modifying units) may be contained as long as the effect of the present invention is not deteriorated. For example, candidates for such structural units include olefins (for example, ethylene, propylene, butylene or the like), acrylic acids (for example, acrylic acid and a salt thereof, acrylic acid esters such as methyl acrylate), methacrylic acids (for example, methacrylic acid and a salt thereof, methacrylic acid esters such as methyl methacrylate), acrylic amides (for example, acrylic amide, N-methyl acrylic amide or the like), methacrylic amides (for example, methacryl amide, N-methylol methacryl amide or the like), N-vinyl lactams (for example, N-vinyl pyrrolidone or the like), N-vinyl amides (for example, N-vinyl formamide, N-vinyl acetoamide, or the like), vinyl ethers (for example, allylethers having polyalkylene oxide in the side chain, methyl vinyl ethers or the like), nitriles (for example, acrylonitrile or the like), vinyl halide compounds (vinyl chloride or the like), and unsaturated dicarboxylic acids (for example, maleic acid, and salt, anhydride, or ester thereof, or the like). It is possible to use single species or combination of species selected from the above-described modifying units. Those modifying units may be introduced into the PVA-based polymer by copolymerization or by post-polymerization reaction.

Proportion (molar ratio) of the modifying units to the vinyl alcohol units satisfy [vinyl alcohol units]/[modifying units] = about 85/15 to about 100/0, preferably about 88/12 to about 99/1, more preferably about 90/10 to about 98/2. In accordance with the purpose, the polymer may further contain one or a combination of additives such as a flame retardant, an anti-freezing agent, a pH regulator, a masking agent, a coloring agent, an oil agent, a special functional agent or the like in an amount not disturbing the effect of the invention.

Degree of polymerization of the PVA-based polymer constituting the PVA fiber is not particularly limited, and may be selected in accordance with the purpose of its application. Based on the consideration of mechanical properties, heat aging resistance of the achieved fibers, average degree of polymerization of the PVA-based polymer determined based on the viscosity of aqueous solution at 30°C is preferably about 500 to about 20000 (preferably about 800 to about 15000, more preferably about 1000 to about 10000). While the polymer of high degree of polymerization is preferably used because of its excellent tenacity, heat aging resistance or the like, the average degree of polymerization may be about 1200 or more and about 2500 or less (preferably 1300 or more and 2400 or less) based on the consideration of polymer production cost, fiber production cost or the like.

The degree of saponification of the PVA-based polymer constituting the PVA fibers is not particularly limited, and may be selected in accordance with the purpose of its application. For example, the degree of saponification may be 88 mole % or more, preferably 90 mole % or more, more preferably 95 mole % or more based on the consideration of mechanical properties of the achieved fiber. In many case, too low saponification degree of the PVA based polymer is not preferred in terms of mechanical strength, processability, production cost or the like of the achieved fibers.

The PVA fibers used in the present invention may be achieved by dissolving such PVA-based polymer in a solvent, spinning fibers by any of wet spinning, dry wet spinning, and dry method, and drawing the spun fibers under dry heat. Among these fibers, fibers achieved by dry spinning are preferred.

In the production process of the PVA fibers, it is possible to use one or a combination of two or more of conventionally used solvents, for example, water, dimethyl sulfoxide (DMSO), dimethyl formamide, dimethyl acetamide, polyhydric alcohols such as glycerin, ethylene glycol, and triethylene glycol, or the like. Among these solvents, water and/or DMSO are specifically preferred based on the consideration of suppliability and influence on the environmental load. While a concentration of the polymer in the spinning solution varies in accordance with the composition and degree of polymerization of the PVA-based polymer, and species of solvent, the concentration is in the range of 6 to 60 % by mass in general cases.

As long as the effect of the present invention is not deteriorated, the spinning solution may contain an additive (or additives) other than the PVA-based polymer. In accordance with the purpose, the additive (additives) may be selected from a surfactant, a decomposition inhibitor, an antifreezing agent, a pH regulator, a masking agent, a coloring agents, an oil agent, or the like.

Where necessary, the PVA fibers according to the present invention may be subjected to drawing after the spinning. In addition, the PVA fibers may be subjected to general treatment for PVA fibers, for example, acetalization.

The antioxidant and/or the boron compound may be added to the spinning solution of PVA. Alternatively, solution or dispersion of the antioxidant (liquid A) an/or solution or dispersion of the boron compound (liquid B) may be applied to the PVA fibers (spun fibers) by post-spinning treatment such as impregnation, coating, or the like. As long as the heat aging resistance can be improved, the liquid A and liquid B may be added to the fiber simultaneously, or one by one separately. In order to achieve satisfactory handleability of the PVA-based polymer in the spinning process, the antioxidant and the boron compound may be added to the polyvinyl alcohol fibers after the spinning.

Where the production method includes the drawing performed after the spinning, the antioxidant and the boron compound are preferably applied to the polyvinyl alcohol fibers after drawing. Specifically, the antioxidant and the boron compound may be added to the polyvinyl alcohol fibers after the post-spinning treatments such as acetalization and staining so as to avoid drop out of the antioxidant and/or the boron compound during the post-spinning treatment. In this case, the antioxidant and the boron compound may be added in the form of solution or dispersion of the antioxidant (liquid A) and solution or dispersion of the boron compound (liquid B) by impregnation or by coating (for example, roller coating) or the like.

Where the liquid A and liquid B are applied to the fibers separately, it is preferable to make the boron compound adhere to the fibers after making the antioxidant adhere to the fiber after the spinning or after drawing. In this case, it is possible to enhance chelating performance of the boron compound for the antioxidant.

### [PVA fibers]

The PVA fibers according to the present invention exhibit excellent heat aging resistance for a long period of time that could not be achieved in the conventional art. For example, as an indication of the heat aging resistance, the PVA fibers of the present invention may have tenacity retention (retention rate of residual tenacity) of 60% or more, preferably 65% or more, more preferably 70% or more after the heat treatment of the fiber at 150°C for 400 hours. The tenacity retention denotes a value determined by a method described in the below-described Examples.

Single fiber fineness of the PVA fibers may be varied depending on the use and purpose. For example, the single fiber fineness may be about 0.1 to about 10 dtex, preferably about 1 to about 7 dtex. The PVA fibers may be used in various forms including filaments, cut fibers (crimped fiber or the like), spun yarns, strings, braids, ropes, fabrics (non-woven fabrics, woven or knitted fabrics), or the like. Where necessary, the PVA fibers may be used in combination with different fibers.

The above-described PVA fibers can be satisfactorily used as reinforcing material in plastics, cements, and rubber materials such as tires, vehicle hoses (radiator hoses, oil brake hoses), and conveyer belts, and industrial material such as ropes, canvases, tents, fishing nets, land nets, and geotextiles.

### EXAMPLES

Hereafter, the present invention will be explained more in detail with reference to the examples, while it should be noted that the present invention is not limited by these examples.

### [Amount of antioxidant]

PVA fibers of 1 g were weighed precisely. After ashing the fibers by incineration method, the obtained ash was diluted by aqueous solution of nitric acid. The solution was analyzed by atomic absorption spectroscopy, and an amount of manganese applied to the fibers was calculated from calibration curve. Amount of manganese chloride contained as an antioxidant was calculated from this result.

With respect to the antioxidants other than the manganese chloride, it was estimated that similar amount of antioxidant was applied to the fibers by the use of similar concentration in the solution as in the solution used for adhering the manganese chloride.

### [Amount of boron compound]

PVA fibers were dissolved in water of 140°C in a sealed condition. Mannite (product of KANTO CHEMICAL CO., INC.), chemical that easily reacts with boron, was added to the solution, and an amount of boric acid applied to the fibers was determined by titration with NaOH.

With respect to chelating agent other than the boric acid, it was estimated that the amount of adhesion was similar to that of boric acid when a concentration in the solution was similar to the boric acid concentration in the solution used for adhering the boric acid.

### [Amount of sodium chloride]

Since the sodium chloride was applied to the fibers using the same water bath as the manganese chloride while reducing the concentration, the amount of adhesion was calculated from the amount of the manganese chloride estimating that the amount was proportional to the concentration ratio.

### [Tenacity retention]

A yarn in a tensionless state was introduced in a hot-air oven. Tenacity of the yarn was measured after heating the yarn for 100 hours, and after heating the yarn for 400 hours at 150°C. Retention rate (in %) of the tenacity relative to the tenacity of the yarn before the heating was calculated. The tenacity of the yarn was measured in accordance with JIS L1013.

### Example 1

An aqueous solution containing, in an amount excluding crystal water, 5 g/L of manganese (II) chloride tetrahydrate (Wako Pure Chemical Industries, Ltd.) and 1 g/L of sodium chloride (Wako Pure Chemical Industries, Ltd) was prepared. PVA fibers (Vinylon 1239 (1333 dtex/200 f), a product of KURARAY CO., LTD.) were dipped in the solution and left in the solution for 30 minutes at 60°C. After that, surface water was removed from the PVA fibers by centrifugal dewatering. After that, the fibers were air-dried for 16 to 20 hours at about 20°C.

Next, the above-described fibers treated with the antioxidant were dipped in an aqueous solution containing 0.1 g/L of boric acid (Wako Pure Chemical Industries, Ltd), and left in the solution for 30 minutes at 60°C. After that, surface water was removed from the fibers by centrifugal dewatering, and the fibers were subsequently air-dried for 16 to 20 hours at about 20°C. Thus, PVA fibers adhered with manganese chloride as antioxidant and boric acid as chelating agent were obtained. The thus obtained PVA fibers were added with antioxidant and boron compound, and were calculated to be added with the sodium chloride as a stabilizing agent in the proportions shown in Table 1. Tenacity retention of the thus achieved fibers is shown in Table 1.

### Example 2

PVA fibers were obtained in the same manner as in Example 1 except that boric acid concentration in the solution was 1 g/L. The thus obtained PVA fibers were added with antioxidant and boron compound, and were calculated to be added with the sodium chloride as a stabilizing agent in the proportions shown in Table 1. Tenacity retention of the thus achieved fibers is shown in Table 1.

### Example 3

PVA-based fibers were obtained in the same manner as in Example 1 except that concentration of the antioxidant was 10 g/L, concentration of sodium chloride was 2 g/L, and concentration of boric acid was 1 g/L. The thus achieved PVA fibers were added with antioxidant and boron compound, and were calculated to be added with the sodium chloride as a stabilizing agent in the proportions shown in Table 1. Tenacity retention of the thus achieved fibers is shown in Table 1.

### Example 4

PVA fibers were obtained in the same manner as in Example 1 except that concentration of the antioxidant was 10 g/L, concentration of sodium chloride was 2 g/L, and concentration of boric acid was 5 g/L. The thus achieved PVA fibers were added with antioxidant and boron compound, and were calculated to be added with the sodium chloride as a stabilizing agent in the proportions shown in Table 1. Tenacity retention of the thus achieved fibers is shown in Table 1.

### Examples 5 to 8

In Examples 5 to 8, PVA fibers were obtained in the same manner as in Example 1 except that the antioxidant was replaced to one of copper chloride, iron chloride, nickel chloride, and cobalt chloride respectively. The thus obtained PVA fibers were added with antioxidant and boron compound, and were calculated to be added with the sodium chloride as a stabilizing agent in the proportions shown in Table 1. Tenacity retention of the thus achieved fibers is shown in Table 1.

### Example 9

An aqueous solution containing, in an amount excluding crystal water, 50 g/L of manganese chloride was prepared. PVA fibers (Vinylon 1239 (1333 dtex/200 f), a product of KURARAY CO., LTD.) were dipped in the solution and left in the solution for 30 minutes at 60°C. After that, surface water was removed from the PVA fibers by centrifugal dewatering, and the fibers were air-dried for 16 to 20 hours at about 20°C.

Next, the above-described fibers treated with the antioxidant was dipped in an aqueous solution containing 50 g/L of boric acid (Wako Pure Chemical Industries, Ltd), and left in the solution for 30 minutes at 60°C. After that, surface water was removed from the fibers by centrifugal dewatering, and the fibers were subsequently air-dried for 16 to 20 hours at 20°C. Thus, PVA fibers adhered with manganese chloride as antioxidant and boric acid as chelating agent were obtained. The thus obtained PVA fibers were added with antioxidant and boron compound in the proportions shown in Table 1. Tenacity retention of the thus achieved fibers is shown in Table 1.

### Comparative Example 1

Fibers were obtained in the same manner as in Example 1 except that antioxidant and chelating agent and stabilizing agent were not used. Tenacity retention of the thus achieved fibers is shown in Table 1.

### Comparative Example 2

Fibers were obtained in the same manner as in Example 1 except that antioxidant and stabilizing agent were not used. It was calculated that the thus obtained PVA fibers were added with chelating agent in a proportion as shown in Table 1. Tenacity retention of the thus achieved fibers is shown in Table 1.

### Comparative Example 3

Fibers were obtained in the same manner as in Example 1 except that 2-mercaptobenzimidazole in a concentration of 5 g/L was used as the antioxidant and that chelating agent and stabilizing agent were not used. It was calculated that the thus obtained PVA fibers were added with the antioxidant in a proportion as shown in Table 1. Tenacity retention of the thus achieved fibers is shown in Table 1.

### Comparative Example 4

Fibers were obtained in the same manner as in Example 1 except that dibutylhydroxytoluene (BHT) in a concentration of 5 g/L was used as the antioxidant and chelating agent and stabilizing agent were not used. It was calculated that the thus obtained PVA fibers were added with the antioxidant in a proportion as shown in Table 1. Tenacity retention of the thus achieved fibers is shown in Table 1.

### Comparative Example 5

Fibers were obtained in the same manner as in Example 1 except that dibutylhydroxytoluene (BHT) in a concentration of 5 g/L was used as the antioxidant and boric acid in a concentration of 0.1g/L was used as the chelating agent. Stabilizing agent was not used. Tenacity retention of the thus achieved fibers is shown in Table 1.

### Comparative Example 6

Fibers were obtained in the same manner as in Example 1 except that chelating agent was not used. The thus obtained PVA fibers were added with the antioxidant and were calculated to be added with the sodium chloride in proportions as shown in Table 1. Tenacity retention of the thus achieved fibers is shown in Table 1.

### Comparative Example 7

Fibers were obtained in the same manner as in Example 1 except that sodium citrate in a concentration of 1 g/L was used as the chelating agent. The thus obtained PVA fibers were added with the antioxidant in a proportion as shown in Table 1. In addition, the fibers were calculated to be added with the chelating agent and sodium chloride in proportions as shown in Table 1. Tenacity retention of the thus achieved fibers is shown in Table 1.

### Comparative Example 8

Fibers were obtained in the same manner as in Example 1 except that EDTA in a concentration of 1 g/L was used as the chelating agent. The thus obtained PVA fibers were added with the antioxidant in a proportion as shown in Table 1. In addition, the fibers were calculated to be added with the chelating agent and sodium chloride in proportions as shown in Table 1. Tenacity retention of the thus achieved fibers is shown in Table 1.

### Comparative Example 9

Fibers were obtained in the same manner as in Example 1 except that the concentration of boric acid was 0.01 g/L. The thus obtained PVA fibers were added with the antioxidant and boron compound, and were calculated to be added with sodium chloride in a proportion as shown in Table 1. Tenacity retention of the thus achieved fibers is shown in Table 1.

**Table 1**

| | Antioxidant (% by mass: relative to the mass of fibers) | | | | | | | Chelating agent (% by mass: relative to the mass of antioxidant) | | | Stabilizer (% by mass relative to the mass of antioxidant) | Tenacity retention (%) | |
|---|---|---|---|---|---|---|---|---|---|---|---|---|---|
| | Manganese chloride | Copper chloride | Iron chloride | Nickel chloride | Cobalt chloride | 2-mercaptobenzimidazole | BHT | Boric acid | Sodium citrate | EDTA | Sodium chrolide | 100h | 400h |
| Example 1 | 0.1 | - | - | - | - | - | - | 2 | - | - | 20 | 92 | 67 |
| Example 2 | 0.1 | - | - | - | - | - | - | 20 | - | - | 20 | 98 | 69 |
| Example 3 | 0.2 | - | - | - | - | - | - | 10 | - | - | 20 | 95 | 75 |
| Example 4 | 0.2 | - | - | - | - | - | - | 50 | - | - | 20 | 95 | 75 |
| Example 5 | - | 0.1 | - | - | - | - | - | 2 | - | - | 20 | 90 | 70 |
| Example 6 | - | - | 0.1 | - | - | - | - | 2 | - | - | 20 | 87 | 65 |
| Example 7 | - | - | - | 0.1 | - | - | - | 2 | - | - | 20 | 88 | 62 |
| Example 8 | - | - | - | - | 0.1 | - | - | 2 | - | - | 20 | 85 | 67 |
| Example 9 | 1 | - | - | - | - | - | - | 50 | - | - | - | 90 | 60 |
| Com. Ex. 1 | - | - | - | - | - | - | - | - | - | - | - | 54 | 18 |
| Com. Ex. 2 | - | - | - | - | - | - | - | 2 | - | - | - | 54 | 18 |
| Com. Ex. 3 | - | - | - | - | - | 0.1 | - | - | - | - | - | 53 | 18 |
| Com. Ex. 4 | - | - | - | - | - | - | 0.1 | - | - | - | - | 53 | 18 |
| Com. Ex. 5 | - | - | - | - | - | - | 0.1 | 2 | - | - | - | 54 | 18 |
| Com. Ex. 6 | 0.1 | - | - | - | - | - | - | - | - | - | 20 | 91 | 30 |
| Com. Ex. 7 | 0.1 | - | - | - | - | - | - | - | 20 | - | 20 | 77 | 25 |
| Com. Ex. 8 | 0.1 | - | - | - | - | - | - | - | - | 20 | 20 | 79 | 30 |
| Com. Ex. 9 | 0.1 | - | - | - | - | - | - | 0.2 | - | - | 20 | 95 | 45 |

As shown in Table 1, samples after the treatment for 100 hours showed difference in tenacity retention. Even the fibers that did not show distinguishable difference in tenacity retention after 100 hours showed remarkable difference in tenacity retention after the treatment for 400 hours.

More specifically, in Comparative Example 1, without using antioxidant, the residual tenacity was reduced to about half the value after the treatment at 150°C for 100 hours, and only 18% of the tenacity before the treatment is retained after the treatment at 150°C for 400 hours. In Comparative Example 2 where the fibers were adhered only with boric acid as chelating agent without using the antioxidant, the residual tenacity was reduced to about half the value after the treatment at 150°C for 100 hours, and only 18% of the tenacity before the treatment is retained after the treatment at 150°C for 400 hours. In Comparative Examples 3 and 4, the residual tenacity of the fibers was reduced to about half the original value after the treatment for 100 hours, even though 2-mercaptobenzimidazole and BHT used in these fibers were reported as antioxidants. As shown in Comparative Example 5, the residual tenacity of the fibers was reduced to about half the original value after the treatment for 100 hours, even when boric acid was used as a chelating agent for BHT.

In Comparative Example 6 using manganese chloride as the antioxidant, residual tenacity of the fibers was substantially the same level as those of the inventive examples after the treatment at 150°C for 100 hours, but the residual tenacity was reduced largely after the treatment for 400 hours due to lack of boric acid as a chelating agent.

In Comparative Example 9 using manganese chloride as an antioxidant, residual tenacity of the fibers was substantially the same level as those of the inventive examples after the treatment at 150°C for 100 hours, but the residual tenacity was reduced largely after the treatment for 400°C since the amount of boric acid was too small.

In Comparative Examples 7 and 8 using chelating agent other than the boric acid, the residual tenacity of the fibers was reduced to about half the value after the treatment at 150°C for 100 hours, and the residual tenacity was reduced remarkably after the treatment for 400 hours.

On the other hand, in PVA fibers of each of Examples 1 to 9, fibers after the treatment at 150°C for 100 hours show tenacity retention of 85% or more of the value before the heat treatment. Fibers after the treatment at 400 hours show tenacity retention of 60% or more of the value before the heat treatment, where Examples 3 and 4 using relatively large amount of antioxidant specifically show tenacity retention of 70% or more of the value before the heat treatment.

### INDUSTRIAL APPLICABILITY

Since the PVA fibers according to the present invention can retain their tenacity for a long period of time, the fibers can be satisfactorily used as reinforcing material in plastics, cements, and rubber materials such as tires, vehicle hoses (radiator hose, oil brake hose), and conveyer belts, and industrial material such as ropes, canvases, tents, fishing nets, land nets, and geotextiles.

## Claims

1. Polyvinyl alcohol fibers having excellent heat aging resistance, containing:
an antioxidant composed of an inorganic or organic water soluble salt of at least one metal selected from the group consisting of manganese, copper, iron, nickel, cobalt, and zinc; and
a boron compound that acts as a chelating agent for the antioxidant,
wherein the content of the antioxidant in the fibers is 0.05% by mass or more, and a proportion of the boron compound relative to the antioxidant is 0.5% to 60% by mass, and wherein the mass of the metal salt is calculated as a mass of an anhydride, and the mass of the PVA fibers is calculated after centrifugal hydroextraction and subsequently air drying the fibers at 20 °C for 16 to 20 hours.

2. Polyvinyl alcohol fibers according to claim 1,
wherein the content of the antioxidant in the fiber is 0.05 to 10% by mass.

3. Polyvinyl alcohol fibers according to claim 1 or 2, wherein the boron compound is at least one selected from the group consisting of boric acid and borates.

4. Polyvinyl alcohol fibers according to any one of claims 1 to 3, wherein the antioxidant is a metal halide.

5. Polyvinyl alcohol fibers according to any one of claims 1 to 4, wherein the antioxidant is at least one selected from the group consisting of manganese chloride, copper chloride, iron chloride, nickel chloride, and cobalt chloride.

6. Polyvinyl alcohol fibers according to any one of claims 1 to 5, wherein the antioxidant is manganese chloride.

7. Polyvinyl alcohol fibers according to any one of claims 1 to 6, further containing sodium chloride as a stabilizer for the antioxidant.

8. Polyvinyl alcohol fibers according to claim 7, wherein the proportion of the sodium chloride to the antioxidant is 5 to 50% by mass.

9. Polyvinyl alcohol fibers according to any one of claims 1 to 8, wherein tenacity retention after a heating treatment at 150°C for 400 hours is 60% or more, wherein the tenacity of fibers is measured in accordance with JIS L1013 and the tenacity retention is obtained as a retention rate of the tenacity after heating relative to the tenacity before heating.

10. Use of polyvinyl alcohol fibers according to any one of claims 1 to 9 for reinforcing a rubber product.

11. A method of producing polyvinyl alcohol fibers according to any one of claims 1 to 9, at least comprising:
performing spinning of fibers from a spinning solution containing polyvinyl alcohol based polymer,
wherein the antioxidant is added into the spinning solution or applied to the polyvinyl alcohol fibers after spinning by a form of a solution or a dispersion of the antioxidant, and
the boron compound is added into the spinning solution or applied to the polyvinyl alcohol fibers after spinning by a form of a solution or a dispersion of the boron compound.

12. The method for producing polyvinyl alcohol fibers according to claim 11, wherein the antioxidant and the boron compound are added to the polyvinyl alcohol fibers after the spinning.

13. The method for producing polyvinyl alcohol fibers according to claim 11 or 12, further comprising drawing of the fibers performed after the spinning, wherein the antioxidant and the boron compound are added to the polyvinyl alcohol fibers after the drawing.

14. The method according to any one of claims 11 to 13, wherein the boron compound is applied to the fiber after applying the antioxidant to the spun fiber or the drawn fiber.

## Patentansprüche

1. Polyvinylalkoholfasern, die eine ausgezeichnete thermische Alterungsbeständigkeit haben, die aufweisen:
ein Antioxidationsmittel, das aus einem anorganischen oder organischen wasserlöslichen Salz von mindestens einem Metall zusammengesetzt ist, das aus der Gruppe ausgewählt ist, die aus Mangan, Kupfer, Eisen, Nickel, Kobalt und Zink besteht; und
eine Borverbindung, die als ein Chelatbildner für das Antioxidationsmittel dient,
wobei der Gehalt des Antioxidationsmittels in den Fasern 0,05 Masse-% oder mehr beträgt, und ein Anteil der Borverbindung im Verhältnis zum Antioxidationsmittel 0,5% bis 60 Masse-% beträgt, und wobei die Masse des Metallsalzes als eine Masse eines Anhydrids berechnet wird und die Masse der PVA-Fasern nach dem Trockenschleudern und anschließenden Lufttrocknen der Fasern bei 20°C für 16 bis 20 Stunden berechnet wird.

2. Polyvinylalkoholfasern nach Anspruch 1,
wobei der Gehalt des Antioxidationsmittels in der Faser 0,05 bis 10 Masse-% beträgt.

3. Polyvinylalkoholfasern nach Anspruch 1 oder 2, wobei die Borverbindung mindestens eine ist, die aus der Gruppe ausgewählt ist, die aus Borsäure und Boraten besteht.

4. Polyvinylalkoholfasern nach einem der Ansprüche 1 bis 3, wobei das Antioxidationsmittel ein Metallhalogenid ist.

5. Polyvinylalkoholfasern nach einem der Ansprüche 1 bis 4, wobei das Antioxidationsmittel mindestens eines ist, das aus der Gruppe ausgewählt ist, die aus Manganchlorid, Kupferchlorid, Eisenchlorid, Nickelchlorid und Kobaltchlorid besteht.

6. Polyvinylalkoholfasern nach einem der Ansprüche 1 bis 5, wobei das Antioxidationsmittel Manganchlorid ist.

7. Polyvinylalkoholfasern nach einem der Ansprüche 1 bis 6, das ferner Natriumchlorid als einen Stabilisator für das Antioxidationsmittel enthält.

8. Polyvinylalkoholfasern nach Anspruch 7, wobei der Anteil des Natriumchlorids im Antioxidationsmittel 5 bis 50 Masse-% beträgt.

9. Polyvinylalkoholfasern nach einem der Ansprüche 1 bis 8, wobei die Zähigkeitsbeibehaltung nach einer Wärmebehandlung bei 150°C für 400 Stunden 60% oder mehr beträgt, wobei die Zähigkeit der Fasern in Übereinstimmung mit JIS L1013 gemessen wird und die Zähigkeitsbeibehaltung als eine Beibehaltungsrate der Zähigkeit nach der Erwärmung im Verhältnis zur Zähigkeit vor der Erwärmung erhalten wird.

10. Verwendung der Polyvinylalkoholfasern nach einem der Ansprüche 1 bis 9 zum Verstärken eines Gummiprodukts.

11. Verfahren zum Herstellen von Polyvinylalkoholfasern nach einem der Ansprüche 1 bis 9, das mindestens aufweist:
Durchführen des Spinnens von Fasern aus einer Spinnlösung, die ein polyvinylalkoholbasiertes Polymer aufweist,
wobei das Antioxidationsmittel nach dem Spinnen in Form einer Lösung oder einer Dispersion des Antioxidationsmittels in die Spinnlösung zugegeben wird oder auf die Polyvinylalkoholfasern aufgebracht wird, und
die Borverbindung nach dem Spinnen in Form einer Lösung oder einer Dispersion der Borverbindung in die Spinnlösung zugegeben wird oder auf die Polyvinylalkoholfasern aufgebracht wird.

12. Verfahren zum Herstellen von Polyvinylalkoholfasern nach Anspruch 11, wobei das Antioxidationsmittel und die Borverbindung nach dem Spinnen zu den Polyvinylalkoholfasern zugegeben werden.

13. Verfahren zum Herstellen von Polyvinylalkoholfasern nach Anspruch 11 oder 12, das ferner das Ziehen der Fasern aufweist, das nach dem Spinnen durchgeführt wird, wobei das Antioxidationsmittel und die Borverbindung nach dem Ziehen zu den Polyvinylalkoholfasern zugegeben werden.

14. Verfahren nach einem der Ansprüche 11 bis 13, wobei die Borverbindung nach dem Aufbringen des Antioxidationsmittels auf die gesponnene Faser oder die gezogene Faser auf die Faser aufgebracht wird.

## Revendications

1. Fibres d'alcool polyvinylique dotées d'une excellente résistance au vieillissement thermique, contenant :
un antioxydant composé d'un sel inorganique ou organique soluble dans l'eau d'au moins un métal sélectionné dans le groupe comprenant manganèse, cuivre, fer, nickel, cobalt et zinc ; et
un composé de bore agissant comme agent chélateur pour l'antioxydant,
où la teneur d'antioxydant dans les fibres est égale ou supérieure à 0,05 % en masse, et le rapport entre le composé de bore et l'antioxydant est compris entre 0,5 % et 60 % en masse, et où la masse du sel métallique est calculée en tant que masse d'un anhydride, et la masse des fibres PVA est calculée après hydroextraction centrifuge suivie d'un séchage par air des fibres à 20 °C pendant 16 à 20 heures.

2. Fibres d'alcool polyvinylique selon la revendication 1,
où la teneur de l'antioxydant dans la fibre est comprise entre 0,05 et 10 % en masse.

3. Fibres d'alcool polyvinylique selon la revendication 1 ou la revendication 2, où le composé de bore est au moins un composé sélectionné dans le groupe comprenant acide borique et borates.

4. Fibres d'alcool polyvinylique selon l'une des revendications 1 à 3, où l'antioxydant est un halogénure métallique.

5. Fibres d'alcool polyvinylique selon l'une des revendications 1 à 4, où l'antioxydant est au moins un antioxydant sélectionné dans le groupe comprenant chlorure de manganèse, chlorure de cuivre, chlorure de fer, chlorure de nickel et chlorure de cobalt.

6. Fibres d'alcool polyvinylique selon l'une des revendications 1 à 5, où l'antioxydant est du chlorure de manganèse.

7. Fibres d'alcool polyvinylique selon l'une des revendications 1 à 6, contenant en outre du chlorure de sodium en tant que stabilisant pour l'antioxydant.

8. Fibres d'alcool polyvinylique selon la revendication 7, où le rapport entre chlorure de sodium et l'antioxydant est compris entre 5 et 50 % en masse.

9. Fibres d'alcool polyvinylique selon l'une des revendications 1 à 8, où la rétention de ténacité après un traitement thermique à 150 °C pendant 400 heures est égale ou supérieure à 60 %, la ténacité des fibres étant mesurée conformément à JIS L1013 et la rétention de ténacité étant obtenue en tant que taux de rétention de la ténacité après chauffage par rapport à la ténacité avant chauffage.

10. Utilisation de fibres d'alcool polyvinylique selon l'une des revendications 1 à 9 pour renforcer un produit à base de caoutchouc.

11. Procédé de production de fibres d'alcool polyvinylique selon l'une des revendications 1 à 9, comprenant au moins :
l'exécution d'un filage de fibres à partir d'une solution de filage contenant un polymère à base d'alcool polyvinylique,
l'antioxydant étant ajouté dans la solution de filage ou appliqué sur les fibres d'alcool polyvinylique après filage par une forme d'une solution ou d'une dispersion de l'antioxydant, et
le composé de bore étant ajouté dans la solution de filage ou appliqué sur les fibres d'alcool polyvinylique après filage par une forme d'une solution ou d'une dispersion du composé de bore.

12. Procédé de production de fibres d'alcool polyvinylique selon la revendication 11, où l'antioxydant et le composé de bore sont ajoutés aux fibres d'alcool polyvinylique après filage.

13. Procédé de production de fibres d'alcool polyvinylique selon la revendication 11 ou la revendication 12, comprenant en outre l'étirage des fibres exécuté après filage, l'antioxydant et le composé de bore étant ajoutés aux fibres d'alcool polyvinylique après étirage.

14. Procédé selon l'une des revendications 11 à 13, où le composé de bore est appliqué sur la fibre après application de l'antioxydant sur la fibre filée ou la fibre étirée.
